# FASCICULE DE BREVET EUROPEEN

(11) **EP 4 410 669 B1**
(45) Date de publication et mention de la délivrance du brevet: **22.07.2026**
(21) Numéro de dépôt: 24151172.4
(22) Date de dépôt: 10.01.2024
(51) Int. Cl.: B64C 21/10, B23K 20/12, B64D 29/00, B64D 33/02, F02C 7/04

(54) **ENTRÉE D AIR D AÉRONEF COMPRENANT AU MOINS DEUX PAROIS RELIÉES BOUT À BOUT PAR SOUDAGE, PROCÉDÉ D ASSEMBLAGE D'UNE TELLE ENTRÉE D AIR ET AÉRONEF COMPRENANT AU MOINS UNE TELLE ENTRÉE D AIR**
FLUGZEUGLUFTEINLASS MIT MINDESTENS ZWEI DURCH SCHWEISSEN VERBUNDENEN WÄNDEN, VERFAHREN ZUM ZUSAMMENBAU EINES SOLCHEN LUFTEINLASSES UND FLUGZEUG MIT MINDESTENS EINEM SOLCHEN LUFTEINLASS
AIRCRAFT AIR INTAKE COMPRISING AT LEAST TWO WALLS JOINED TOGETHER BY WELDING, METHOD FOR ASSEMBLING SUCH AN AIR INTAKE AND AIRCRAFT COMPRISING AT LEAST ONE SUCH AIR INTAKE

(30) Priorité: 31.01.2023 FR 2300853
(43) Date de publication de la demande: 07.08.2024
(73) Titulaire: AIRBUS OPERATIONS (S.A.S.), 31060 Toulouse (FR)
(72) Inventeur: BROCHARD, Wolfgang, 31060 TOULOUSE (FR); LAFLY, Anne-Laure, 31060 TOULOUSE (FR)
(74) Mandataire: Airbus-OPS SAS

(56) Documents cités:
- EP-B1- 2 304 204
- US-A1- 2017 107 905
- US-A1- 2020 031 487
- US-A1- 2020 130 856
- US-A1- 2021 107 666
- US-B2- 9 764 849

## Description

La présente demande se rapporte à une entrée d'air d'une nacelle d'aéronef, à un procédé d'assemblage d'une telle entrée d'air ainsi qu'à un aéronef comprenant au moins une telle entrée d'air.

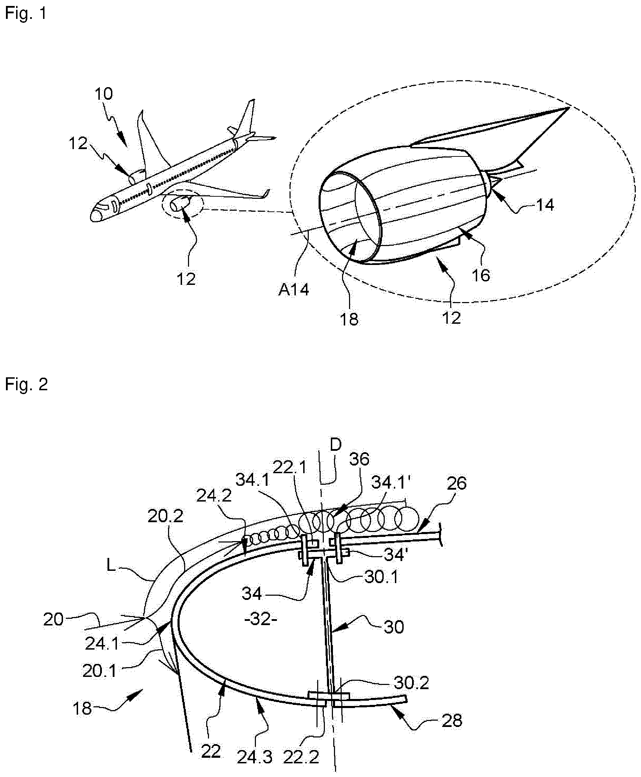

Selon un mode de réalisation visible sur la figure 1, un aéronef 10 comprend plusieurs ensembles de propulsion 12 comprenant chacun une motorisation 14 ainsi qu'une nacelle 16 entourant la motorisation 14 et permettant notamment de canaliser un flux d'air en direction de la motorisation 14.

La motorisation 14 présente un axe de rotation A14. Pour la suite de la description, une direction longitudinale est une direction parallèle à l'axe de rotation A14. Un plan longitudinal est un plan contenant l'axe de rotation A14. Enfin, un plan transversal est un plan perpendiculaire à l'axe de rotation A14. Les notions avant et arrière font référence au sens d'écoulement du flux d'air dans la motorisation en fonctionnement, qui s'écoule de l'avant vers l'arrière.

Chaque nacelle 16 comprend, à l'avant, une entrée d'air 18 configurée pour séparer un flux d'air 20 laminaire en un flux d'air intérieur 20.1 laminaire qui pénètre dans la nacelle 16 en direction de la motorisation 14 et un flux d'air extérieur 20.2 laminaire s'écoulant à l'extérieur de la nacelle 16.

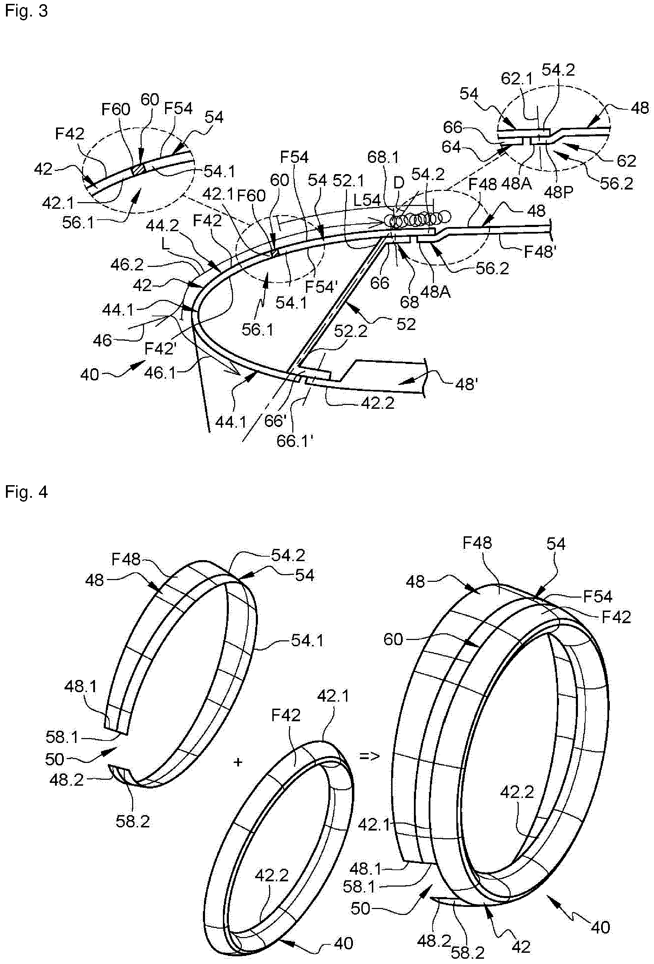

Selon des modes de réalisation non-revendiqués visibles sur les figures 2 et 3, une entrée d'air 18 comprend une lèvre 22 qui présente une forme en C en coupe dans un plan longitudinal. La lèvre 22 comprend un bord d'attaque 24.1 qui scinde le flux d'air 20 en un flux d'air intérieur 20.1 et un flux extérieur 20.2, une portion extérieure 24.2 qui s'étend du bord d'attaque 24.1 jusqu'à un bord arrière extérieur 22.1 de la lèvre 22 et sur laquelle s'écoule le flux d'air extérieur 20.2 ainsi qu'une portion intérieure 24.3 qui s'étend du bord d'attaque 24.1jusqu'à un bord arrière intérieur 22.2 de la lèvre 22 et sur laquelle s'écoule le flux d'air intérieur 20.1.

L'entrée d'air 18 comprend également un panneau extérieur 26 positionné dans le prolongement de la portion extérieure 24.2 de la lèvre 22, un panneau intérieur 28 positionné dans le prolongement de la portion intérieure 24.3 de la lèvre 22 ainsi qu'un cadre avant 30, en forme d'anneau, qui présente une première extrémité 30.1 reliée à la portion extérieure 24.2 de la lèvre 22 et au panneau extérieur 26 ainsi qu'une deuxième extrémité 30.2 reliée à la portion intérieure 24.3 de la lèvre 22 et au panneau intérieur 28. Le cadre avant 30 et la lèvre 22 délimitent un conduit annulaire 32 en forme de D, appelé D-duct.

La première extrémité 30.1 du cadre avant 30 présente une forme en T comportant des première et deuxième ailes 34, 34' plaquées respectivement contre la portion extérieure 24.2 de la lèvre 22 et le panneau extérieur 26, la première aile 34 étant reliée à la portion extérieure 24.2 de la lèvre 22 par une première série d'éléments de liaison 34.1, la deuxième aile 34' étant reliée au panneau extérieur 26 par une deuxième série d'éléments de liaison 34.1'.

Selon ce mode de réalisation, le cadre avant 30 est faiblement incliné si bien que la droite D, passant par les extrémités extérieur et intérieur 30.1, 30.2, forme avec un plan transversal un angle inférieur à 10°.

En fonctionnement, le flux extérieur 20.2 est laminaire à partir du bord d'attaque 24.1 (également appelé point d'arrêt aérodynamique) sur une certaine longueur L. Cette longueur L doit être la plus longue possible pour réduire la traînée générée par l'entrée d'air 18 de la nacelle 16. En l'absence d'éléments de liaison (comme des vis, des rivets ou autres), la longueur L théorique, caractérisant la zone d'air laminaire, pourrait atteindre une distance de l'ordre de 400 à 950 mm en fonction de la taille de la nacelle. Selon le mode de réalisation non-revendiqué visible sur la figure 2, l'entrée d'air 18 comprend des éléments de liaison 34.1, 34.1' séparés du bord d'attaque 24.1 d'une distance inférieure à 500 mm, de l'ordre de 300 mm, qui génèrent des perturbations 36 et réduisent la longueur L, ce qui se traduit par une augmentation de la traînée de l'entrée d'air 18 de la nacelle 16 et, in fine, de la consommation énergétique de l'aéronef 10.

Le document US2020/0031487 se rapporte à une nacelle comprenant une structure de lèvre. La structure de lèvre comprend un corps annulaire interne et un corps annulaire externe connecté par une lèvre ainsi qu'une cloison avant annulaire. La lèvre comprend un élément fusible.

La présente invention vise à remédier à tout ou partie des inconvénients de l'art antérieur. A cet effet, l'invention a pour objet une entrée d'air d'une nacelle d'aéronef comportant :
- une lèvre présentant des faces externe et interne ainsi qu'un bord d'attaque configuré pour scinder un flux d'air en des flux d'air extérieur et intérieur, le flux d'air intérieur pénétrant dans l'entrée d'air, le flux d'air extérieur étant laminaire sur une longueur donnée,
- un panneau extérieur présentant une face externe contre laquelle s'écoule le flux d'air extérieur en fonctionnement, une face interne opposée à la face externe ainsi qu'un bord avant orienté vers la lèvre,
- un cadre avant, en forme d'anneau, qui présente des bords extérieur et intérieur.

Selon l'invention, l'entrée d'air comprend un panneau intercalaire, intercalé entre la lèvre et le panneau extérieur, présentant une face externe contre laquelle s'écoule le flux d'air extérieur en fonctionnement, une face interne opposée à la face externe, un premier bord relié à la lèvre par au moins une première liaison ainsi qu'un deuxième bord relié au panneau extérieur par au moins une deuxième liaison. En complément, la première liaison reliant le premier bord du panneau intercalaire et la lèvre comprend au moins un premier cordon de soudure bout à bout présentant une face externe dans le prolongement des faces externes de la lèvre et du panneau intercalaire, l'entrée d'air comprenant une troisième liaison reliant le bord extérieur du cadre avant et au moins une paroi choisie parmi la lèvre, le panneau extérieur et le panneau intercalaire, la troisième liaison comprenant au moins une extension interne solidaire du panneau intercalaire, orientée vers le cadre avant et reliée à ce dernier, l'extension interne et le panneau intercalaire formant une unique et même pièce.

Cette solution permet de conserver le flux d'air extérieur laminaire sur une grande longueur et ainsi de réduire la traînée et la consommation énergétique d'un aéronef comportant au moins une telle entrée d'air.

Selon une autre caractéristique, le panneau extérieur présente un soyage à proximité de son bord avant ainsi qu'une portion chevauchante, située entre le soyage et le bord avant, positionnée contre la face interne du panneau intercalaire. En complément, la deuxième liaison comprend des éléments de liaison reliant le panneau intercalaire et le panneau extérieur au niveau de sa portion chevauchante.

Selon une autre caractéristique, la deuxième liaison reliant le deuxième bord du panneau intercalaire et le panneau extérieur est séparée du bord d'attaque d'une distance supérieure ou égale à la longueur donnée du flux d'air extérieur laminaire.

L'invention a également pour objet un aéronef comportant au moins une entrée d'air selon l'une des caractéristiques précédentes.

L'invention a également pour objet un procédé d'assemblage d'une entrée d'air selon l'une des caractéristiques précédentes. Selon l'invention, le procédé d'assemblage comprend une étape d'assemblage de la lèvre ou d'une partie de la lèvre et du panneau intercalaire ou d'une partie du panneau intercalaire par soudage grâce à au moins un premier cordon de soudure bout à bout, une étape d'assemblage des panneaux extérieur et intercalaire ainsi qu'une étape d'assemblage du cadre avant.

Selon une autre caractéristique, le premier cordon de soudure bout à bout est obtenu par un procédé de soudage par friction malaxage.

Selon une autre caractéristique, le procédé d'assemblage comprend une étape de calibrage du premier cordon de soudure bout à bout afin que sa face externe affleure les faces externes de la lèvre et du panneau intercalaire.

Selon une autre caractéristique, le procédé d'assemblage comprend une étape de fabrication de première et deuxième demi-lèvres sensiblement symétriques par rapport à un plan longitudinal de symétrie et de premier et deuxième demi-éléments de jonction sensiblement symétriques par rapport au plan longitudinal de symétrie, ainsi qu'une étape de fixation du premier demi-élément de jonction sur la face interne de la première demi-lèvre afin d'obtenir une première moitié de lèvre et du deuxième demi-élément de jonction sur la face interne de la demi-lèvre afin d'obtenir une deuxième moitié de lèvre.

Selon une autre caractéristique, le procédé comprend une étape d'assemblage des première et deuxième moitiés de lèvre en les reliant par des premier et deuxième cordons de soudure bout à bout longitudinaux de manière à obtenir une lèvre.

Selon une autre caractéristique, la lèvre est continue sur toute la circonférence de l'entrée d'air, le panneau intercalaire comprenant une ouverture délimitée par des bords longitudinaux du panneau intercalaire et par une partie d'un bord arrière extérieur de la lèvre. En complément, le procédé d'assemblage comprend, après l'étape d'assemblage de la lèvre et du panneau intercalaire, une étape d'usinage visant à rectifier ou calibrer les bords longitudinaux du panneau intercalaire et le bord arrière extérieur de la lèvre.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef et, extrait de cette vue, un ensemble de propulsion en vue agrandie illustrant un mode de réalisation,
- La figure 2 est une coupe longitudinale d'une entrée d'air d'une nacelle d'aéronef illustrant un mode de réalisation de l'art antérieur,
- La figure 3 est une coupe longitudinale d'une entrée d'air d'une nacelle d'aéronef illustrant un premier mode de réalisation non-revendiqué,
- La figure 4 est une vue en perspective des différentes parties de l'entrée d'air visible sur la figure 3 à différentes étapes de leur assemblage illustrant un premier mode d'assemblage de l'invention,
- La figure 5 est une vue en perspective des différentes parties de l'entrée d'air visible sur la figure 3 à différentes étapes de leur assemblage illustrant un deuxième mode d'assemblage de l'invention,
- La figure 6 est une vue en perspective d'une partie d'une entrée d'air d'une nacelle d'aéronef illustrant un deuxième mode de réalisation de l'invention,
- La figure 7 est une coupe longitudinale de l'entrée d'air visible sur la figure 6,
- La figure 8 est une coupe longitudinale du panneau extérieur de l'entrée d'air visible sur la figure 6,
- La figure 9 est une coupe longitudinale d'une partie d'une entrée d'air d'une nacelle d'aéronef illustrant un troisième mode de réalisation non-revendiqué,
- La figure 10 est une coupe longitudinale d'une partie d'une entrée d'air d'une nacelle d'aéronef illustrant un quatrième mode de réalisation non-revendiqué,
- La figure 11 est une vue en perspective des différentes parties d'une entrée d'air à différentes étapes de leur assemblage illustrant un troisième mode d'assemblage de l'invention,
- La figure 12 une vue en perspective des différentes parties d'une lèvre à différentes étapes de leur assemblage illustrant un mode d'assemblage de l'invention,
- La figure 13 est une vue schématique latérale d'une partie d'une entrée d'air comportant une découpe, avant et après une étape d'usinage, illustrant un mode de réalisation de l'invention.

Selon un mode de réalisation non-revendiqué visible sur la figure 3, une entrée d'air 40 d'une nacelle d'un aéronef comprend une lèvre 42 qui présente, en coupe dans un plan longitudinal, une forme en C. La lèvre 42 comprend un bord d'attaque 44.1, également appelé point d'arrêt aérodynamique, qui scinde le flux d'air 46 en un flux d'air intérieur 46.1 et un flux d'air extérieur 46.2, une portion extérieure 44.2 qui s'étend du bord d'attaque 44.1 jusqu'à un bord arrière extérieur 42.1 de la lèvre 42 et sur laquelle s'écoule le flux d'air extérieur 46.2 ainsi qu'une portion intérieure 44.3 qui s'étend du bord d'attaque 44.1 jusqu'à un bord arrière intérieur 42.2 de la lèvre 42 et sur laquelle s'écoule le flux d'air intérieur 46.1. Le flux d'air extérieur 46.2 est laminaire sur une longueur L, mesurée à partir du bord d'attaque 44.1 (ou point d'arrêt dynamique), pouvant par exemple être comprise entre 400 et 950 mm en fonction des dimensions de la nacelle.

Cette lèvre 42 comprend une face externe F42 contre laquelle s'écoulent les flux d'air intérieur et extérieur 46.1, 46.2 en fonctionnement et une face interne F42' opposée à la face externe F42.

Selon une configuration, la lèvre 42 est réalisée en alliage d'aluminium. Selon un mode de fabrication, la lèvre 42 est obtenue en assemblant plusieurs secteurs angulaires de manière à obtenir une pièce monolithique qui s'étend sur toute la circonférence de l'entrée d'air 40. L'entrée d'air 40 comprend également un panneau extérieur 48 qui présente une face externe F48 contre laquelle s'écoule le flux d'air extérieur 46.2 en fonctionnement ainsi qu'une face interne F48' opposée à la face externe F48. Ce panneau extérieur 48, approximativement cylindrique, présente un bord avant 48A orienté vers la lèvre 42. Ce panneau extérieur 48 peut s'étendre sur toute la circonférence de l'entrée d'air 40 ou non et comprendre des bords longitudinaux 48.1, 48.2 délimitant une ouverture 50.

Selon une configuration, le panneau extérieur 48 est réalisé en alliage d'aluminium ou en matériau composite.

L'entrée d'air 40 peut comprendre un panneau intérieur 48' qui présente une face externe contre laquelle s'écoule le flux d'air intérieur 46.1 en fonctionnement. Ce panneau intérieur 48' n'est pas plus décrit car il peut être identique à ceux des entrées d'air de l'art antérieur. L'entrée d'air 40 comprend également un cadre avant 52, en forme d'anneau, qui présente des bords extérieur et intérieur 52.1, 52.2.

Selon une configuration, le cadre avant 52 est en alliage de titane ou en alliage d'aluminium. Selon un mode de fabrication, le cadre avant 52 est obtenu en assemblant plusieurs secteurs angulaires de manière à obtenir une pièce monolithique.

Selon une caractéristique de l'invention, l'entrée d'air 40 comprend un panneau intercalaire 54, intercalé entre la lèvre 42 et le panneau extérieur 48, qui présente un premier bord 54.1 relié à la lèvre 42 par au moins une première liaison 56.1 ainsi qu'un deuxième bord 54.2 relié au panneau extérieur 48 par au moins une deuxième liaison 56.2.

Le panneau intercalaire 54 présente une face externe F54 contre laquelle s'écoule le flux d'air extérieur 46.2 laminaire en fonctionnement ainsi qu'une face interne F54' opposée à la face externe F54.

Le panneau intercalaire 54 est dans un matériau identique à celui de la lèvre 42. Selon une configuration, le panneau intercalaire 54 est de manière préférentielle en alliage d'aluminium. Le panneau intercalaire 54 est approximativement cylindrique. Il peut s'étendre sur toute la circonférence de l'entrée d'air 40 ou non et comprendre des bords longitudinaux 58.1, 58.2 situés dans le prolongement des bords longitudinaux 48.1, 48.2 du panneau extérieur 48 délimitant l'ouverture 50.

Selon une caractéristique de l'invention, la première liaison 56.1 reliant le premier bord 54.1 du panneau intercalaire 54 et la lèvre 42 comprend au moins un premier cordon de soudure bout à bout 60 présentant une face externe F60 dans le prolongement des faces externes F42 et F54 de la lèvre 42 et du panneau intercalaire 54. Ce premier cordon de soudure bout à bout 60 ne génère pas de perturbations. Par conséquent, même s'il est proche du bord d'attaque 44.1, il permet de conserver le flux d'air extérieur 46.2 laminaire. Cette solution permet de réduire la traînée et la consommation énergétique d'un aéronef comportant au moins une telle entrée d'air 40.

Le fait que les panneaux extérieur et intercalaire 48, 54 présentent des bords longitudinaux 48.1, 48.2, 58.1, 58.2 et ne soient pas de section fermée permet de mieux gérer le positionnement bout à bout du bord arrière extérieur 42.1 de la lèvre 42 et du premier bord 54.1 du panneau intercalaire 54 lors de la réalisation du premier cordon de soudure bout à bout 60. En effet, cette section ouverte permet une plus grande flexibilité des panneaux extérieur et intercalaire 48, 54 afin de gérer les ajustages et les tolérances, contrairement à une section fermée plus rigide.

Selon un mode de réalisation, le premier cordon de soudure bout à bout 60 est obtenu par un procédé de soudage par friction malaxage également appelé procédé de soudage FSW (pour « Friction Stir Welding » en anglais).

Selon un mode de réalisation, le premier cordon de soudure bout à bout 60 est calibré de manière à ce que sa face externe F60 affleure les faces externes F42 et F54 de la lèvre 42 et du panneau intercalaire 54.

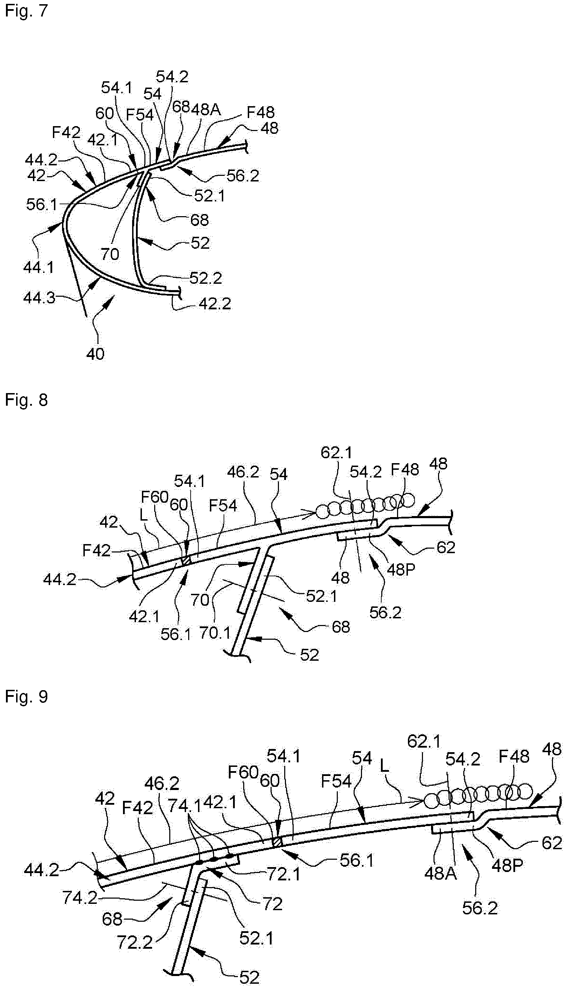

Selon des modes de réalisation revendiqués visibles sur les figures 7, 8 et selon des modes de réalisation non-revendiqués visibles sur les figures 2 et 9, le panneau extérieur 48 présente un soyage 62 à proximité de son bord avant 48A et sensiblement parallèle à ce dernier ainsi qu'une portion chevauchante 48P située entre le soyage 62 et le bord avant 48A. Lorsque les panneaux extérieur et intercalaire 48, 54 sont assemblés, la portion chevauchante 48P du panneau extérieur 48 est positionnée contre la face interne F54' du panneau intercalaire 54. Selon ces modes de réalisation visibles sur les figures 2, 7, 8 et 9, la deuxième liaison 56.2 comprend des éléments de liaison 62.1, répartis sur la circonférence de l'entrée d'air 40, reliant le panneau intercalaire 54 et le panneau extérieur 48 au niveau de sa portion chevauchante 48P.

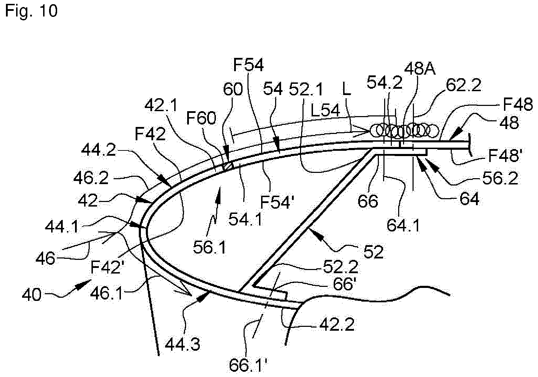

Selon un autre mode de réalisation non-revendiqué visible sur la figure 10, la deuxième liaison 56.2 comprend au moins un élément de jonction 64, sous la forme d'une bande de matière, positionné à cheval contre les faces internes F48', F54' des panneaux extérieur et intercalaire 48, 54 ainsi que des première et deuxième séries d'éléments de liaison 64.1, 64.2 répartis sur la circonférence de l'entrée d'air 40. Les éléments de liaison 64.1 de la première série relient le panneau intercalaire 54 et l'élément de jonction 64. Les éléments de liaison 64.2 de la deuxième série relient le panneau extérieur 48 et l'élément de jonction 64. Selon une configuration visible sur la figure 10, l'élément de jonction 64 correspond à une partie du cadre avant 52, comme un rebord 66 du cadre avant 52. L'élément de jonction 64 de la deuxième liaison 56.2 pourrait être une éclisse ou la deuxième liaison 56.2 pourrait comprendre au moins un deuxième cordon de soudure bout à bout obtenu par un procédé de soudage par friction malaxage, comme le premier cordon de soudure bout à bout 60.

Quel que soit le mode de réalisation, le panneau intercalaire 54 présente une longueur L54 suffisante pour que la deuxième liaison 56.2 et plus particulièrement les éléments de liaison 62.1, 64.1 soient séparés du bord d'attaque 44.1 d'une distance supérieure ou égale à la longueur L du flux d'air extérieur 46.2 laminaire. Ainsi, ce dernier n'est pas perturbé sur cette longueur L.

L'entrée d'air 40 comprend au moins une troisième liaison 68 reliant le bord extérieur 52.1 du cadre avant 52 et au moins une paroi choisie parmi la lèvre 42 (comme illustré sur la figure 9), le panneau extérieur 48 (comme illustré sur la figure 10) et le panneau intercalaire 54 (comme illustré sur les figures 3, 8 et 10).

Selon les différents modes de réalisation, la troisième liaison 68 est positionnée entre le bord d'attaque 44.1 et la première liaison 56.1 comme illustré sur la figure 9, entre les première et deuxième liaisons 56.1, 56.2 comme illustré sur les figures 3 et 8, au niveau de la deuxième liaison 56.2 comme illustré sur la figure 10 ou à l'arrière de la deuxième liaison 56.2.

Selon des modes de réalisation non-revendiqués visibles sur les figures 3 et 10 à titre d'exemple, le cadre avant 52 comprend un rebord extérieur 66 plaqué contre la face interne F54' du panneau intercalaire 54 et, éventuellement, contre la face interne F48' du panneau extérieur 48 comme illustré sur la figure 10, le rebord extérieur 66 et le cadre avant 52 formant une unique et même pièce. Selon ces modes de réalisation, la troisième liaison 68 comprend une première série d'éléments de liaison 64.1, 68.1 reliant le rebord extérieur 66 et le panneau intercalaire 54 ainsi qu'éventuellement une deuxième série d'éléments de liaison 64.2 reliant le rebord extérieur 66 et le panneau extérieur 48, comme illustré sur la figure 10. Les éléments de liaison 64.1, 68.1 de la première série sont séparés du bord d'attaque 44.1 d'une distance supérieure ou égale à la longueur L du flux d'air extérieur 46.2 laminaire. Ainsi, ce dernier n'est pas perturbé sur cette longueur L.

Selon les modes de réalisation visibles sur les figures 3 et 10, le cadre avant 52 est fortement incliné pour écarter le plus possible du bord d'attaque 44.1 les éléments de liaison 64.1, 68.1 reliant le cadre avant 52 et le panneau intercalaire 54. Selon ces modes de réalisation, une droite D, passant par les bords extérieur et intérieur 52.1, 52.2, forme avec un plan transversal un angle supérieur à 30°.

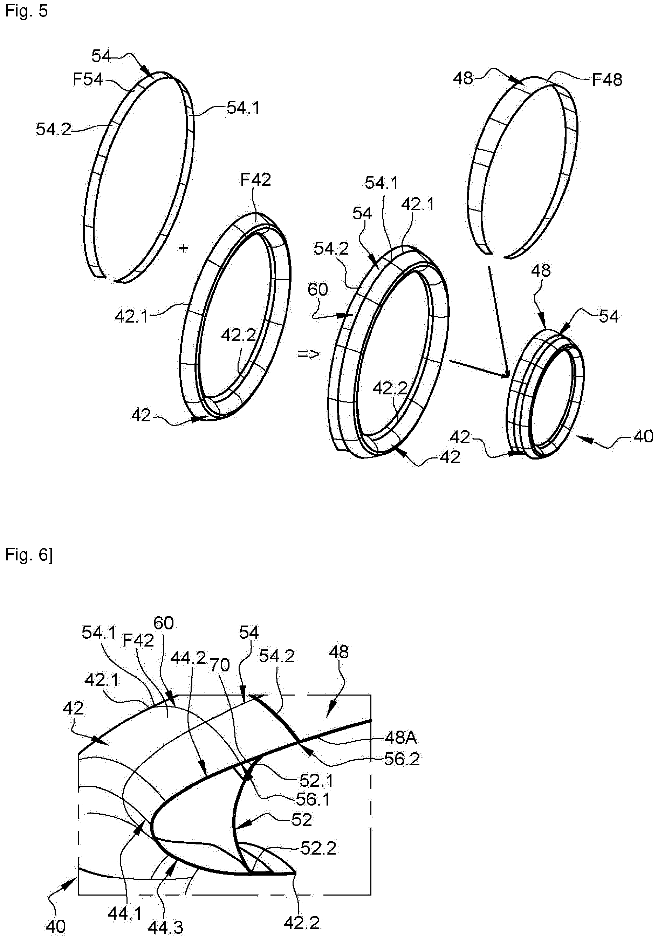

Selon un mode de réalisation revendiqué illustré par les figures 6 à 8, la troisième liaison 68 comprend au moins une extension interne 70 solidaire du panneau intercalaire 54, orientée vers le cadre avant 52 et reliée à ce dernier par des éléments de liaison 70.1, notamment au moins une série d'éléments de liaison 70.1 répartis sur la circonférence de la nacelle. L'extension interne 70 et le panneau intercalaire 54 forment une unique et même pièce. Selon le mode de réalisation visible sur les figures 6 à 8, il n'est pas nécessaire de fortement incliner le cadre avant 52 comme cela est nécessaire pour les modes de réalisation non-revendiqués visibles sur les figures 3 et 10.

Selon un autre mode de réalisation non-revendiqué visible sur la figure 9 à titre d'exemple, la troisième liaison 68 comprend au moins un élément de jonction 72, sous la forme d'une cornière par exemple, présentant une première aile 72.1 plaquée contre la face interne F42' de la lèvre 42 et reliée à cette dernière par des éléments de liaison, au moins un cordon de soudure 74.1 ou des points de soudure ainsi qu'une deuxième aile 72.2 plaquée contre le cadre avant 52 et reliée à ce dernier par des éléments de liaison 74.2, notamment au moins une série d'éléments de liaison 74.2 répartis sur la circonférence de la nacelle. La première aile 72.1 n'est pas nécessairement reliée à la lèvre 42. Elle peut être reliée à au moins une paroi choisie parmi la lèvre 42, le panneau intercalaire 54 et le panneau extérieur 48. Le fait de relier la première aile 72.1 à la lèvre 42 ou au panneau intercalaire 54 permet d'obtenir un cadre avant 52 faiblement incliné. A titre d'exemple, la première aile 72.1 de chaque élément de jonction 72 est reliée à la lèvre 42, au panneau intercalaire 54 ou au panneau extérieur 48 par au moins un cordon de soudure obtenu par un procédé de soudage par friction malaxage également appelé procédé de soudage FSW (pour « Friction Stir Welding » en anglais).

Selon une première variante, la troisième liaison 68 comprend un unique élément de jonction 72 qui s'étend sur toute la circonférence de l'entrée d'air 40. Selon une deuxième variante, la troisième liaison 68 comprend plusieurs éléments de jonction 72 répartis sur la circonférence de l'entrée d'air 40.

Selon des différents modes de réalisation visibles sur les figures 3, 6, 7 et 10, le bord intérieur 52.2 du cadre avant 52 comprend un rebord 66' plaqué contre la face interne d'au moins une paroi parmi la portion intérieure 44.3 de la lèvre 42 et le panneau intérieur 48' et relié à ladite paroi par une série d'éléments de liaison 66.1'.

Selon un premier mode opératoire visible sur la figure 4, un procédé d'assemblage de l'entrée d'air 40, visible sur la figure 3 par exemple, comprend une étape de fabrication de la lèvre 42, du panneau intercalaire 54 et du panneau extérieur 48 indépendamment les uns des autres ; une étape d'usinage du bord arrière extérieur 42.1 de la lèvre 42 et du premier bord 54.1 du panneau intercalaire 54 ; une étape d'assemblage des panneaux extérieur et intercalaire 48, 54 ; une étape d'assemblage de la lèvre 42 et du panneau intercalaire 54 en les reliant par soudage grâce à au moins un premier cordon de soudure bout à bout 60 ; une étape de calibrage du premier cordon de soudure bout à bout 60 et enfin une étape d'assemblage du cadre avant 52.

Le procédé d'assemblage peut comprendre une étape d'anodisation et/ou une étape de traitement thermique, après l'étape de soudage, pour stabiliser la pièce.

Selon un deuxième mode opératoire visible sur la figure 5, un procédé d'assemblage de l'entrée d'air 40, visible sur la figure 3 par exemple, comprend une étape de fabrication de la lèvre 42, du panneau intercalaire 54 et du panneau extérieur 48 indépendamment les uns des autres ; une étape d'usinage du bord arrière extérieur 42.1 de la lèvre 42 et du premier bord 54.1 du panneau intercalaire 54 ; une étape d'assemblage de la lèvre 42 et du panneau intercalaire 54 en les reliant par soudage grâce à au moins un premier cordon de soudure bout à bout 60 ; une étape de calibrage du premier cordon de soudure bout à bout 60 ; une étape d'assemblage des panneaux extérieur et intercalaire 48, 54 et enfin une étape d'assemblage du cadre avant 52.

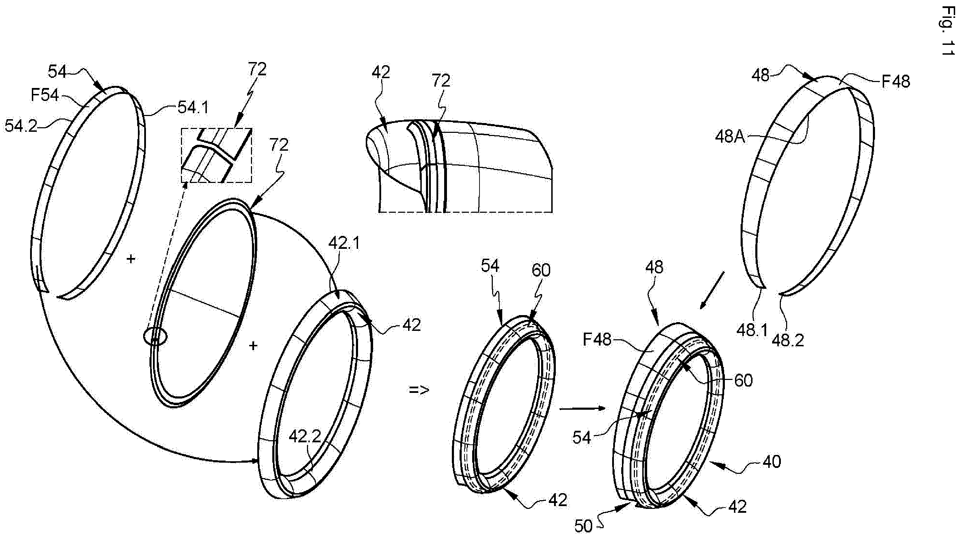

Selon un troisième mode opératoire visible sur la figure 11, un procédé d'assemblage de l'entrée d'air 40, visible sur la figure 9, comprend une étape de fabrication de la lèvre 42, du panneau intercalaire 54 et du panneau extérieur 48 indépendamment les uns des autres ; une étape d'usinage du bord arrière extérieur 42.1 de la lèvre 42 et du premier bord 54.1 du panneau intercalaire 54 ; une étape de fixation du (ou des) élément(s) de jonction 72 sur la face interne F42' de la lèvre 42 ; une étape d'assemblage de la lèvre 42 et du panneau intercalaire 54 par soudage grâce à au moins un premier cordon de soudure bout à bout 60 ; une étape de calibrage du premier cordon de soudure bout à bout 60, une étape d'assemblage des panneaux extérieur et intercalaire 48, 54 et enfin une étape d'assemblage du cadre avant 52.

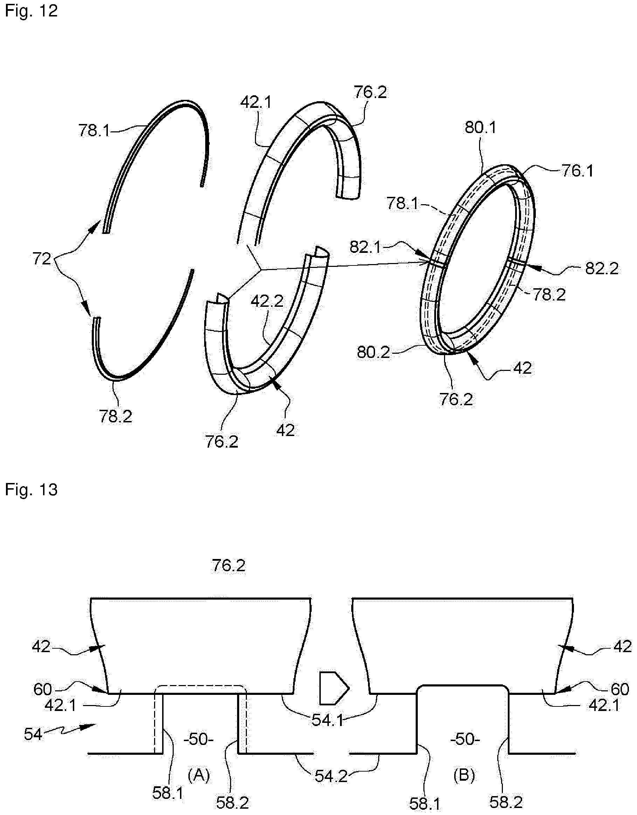

Selon un autre mode de réalisation visible sur la figure 12, la lèvre 42 est obtenue à partir de première et deuxième demi-lèvres 76.1, 76.2 sensiblement symétriques par rapport à un plan longitudinal de symétrie de manière préférentielle. En complément, l'élément de jonction 72 est obtenu à partir de premier et deuxième demi-éléments de jonction 78.1, 78.2 sensiblement symétriques par rapport au plan longitudinal de symétrie. Un procédé d'assemblage d'une telle lèvre 42 comprend une étape de fabrication des première et deuxième demi-lèvres 76.1, 76.2 et des premier et deuxième demi-éléments de jonction 78.1, 78.2, une étape de fixation du premier demi-élément de jonction 78.1 sur la face interne de la première demi-lèvre 76.1 afin d'obtenir une première moitié de lèvre 80.1 ainsi que du deuxième demi-élément de jonction 78.2 sur la face interne de la demi-lèvre 76.2 afin d'obtenir une deuxième moitié de lèvre 80.2 puis une étape d'assemblage des première et deuxième moitiés de lèvre 80.1, 80.2 en les reliant par des premier et deuxième cordons de soudure bout à bout longitudinaux 82.1, 82.2 de manière à obtenir une lèvre 42.

En complément, le panneau intercalaire 54 peut être obtenu à partir de premier et deuxième demi-panneaux intercalaires sensiblement symétriques par rapport au plan longitudinal de symétrie. Selon une première variante, le procédé d'assemblage de l'entrée d'air 40 comprend, après l'assemblage de la lèvre 42 obtenue à partir de première et deuxième demi-lèvres 76.1, 76.2 et du panneau intercalaire 54 obtenu à partir de premier et deuxième demi-panneaux intercalaires, une étape d'assemblage de la lèvre 42 et du panneau intercalaire 54 par soudage grâce à au moins un premier cordon de soudure bout à bout 60. Selon une deuxième variante, le procédé d'assemblage comprend une première étape d'assemblage de la première moitié de lèvre 80.1 et du premier demi-panneau intercalaire grâce à au moins un premier demi-cordon de soudure bout à bout afin d'obtenir une première moitié d'entrée d'air ainsi que de la deuxième moitié de lèvre 80.2 et du deuxième demi-panneau intercalaire grâce à au moins un deuxième demi-cordon de soudure bout à bout afin d'obtenir une deuxième moitié d'entrée d'air puis une étape d'assemblage des première et deuxième moitiés d'entrée d'air en les reliant par des premier et deuxième cordons de soudure bout à bout longitudinaux 82.1, 82.2 de manière à obtenir l'entrée d'air 40.

Quel que soit le mode de réalisation, le procédé d'assemblage comprend une étape d'assemblage de la lèvre 42 (ou d'une partie de la lèvre 76.1, 76.2) et du panneau intercalaire 54 (ou d'une partie du panneau intercalaire) par soudage grâce à au moins un premier cordon de soudure bout à bout 60. Selon une configuration, le procédé d'assemblage comprend une étape de fixation d'au moins un élément de jonction 72 (ou d'une partie d'un élément de jonction) contre la face interne F42', F48', F54' de la lèvre 42 (ou une partie de la lèvre 76.1, 76.2), du panneau intercalaire 54 (ou une partie du panneau intercalaire) ou du panneau extérieur 48.

Selon un mode de réalisation, la lèvre 42 est continue sur toute la circonférence de l'entrée d'air 40. En complément, le panneau intercalaire 54 comprend une ouverture 50 délimitée par des bords longitudinaux 58.1, 58.2 du panneau intercalaire 54 et par une partie du bord arrière extérieur 42.1 de la lèvre 42. Le procédé d'assemblage comprend, après l'étape d'assemblage par soudage de la lèvre 42 et du panneau intercalaire 54 grâce à un premier cordon de soudure bout à bout 60 visible sur la partie (A) de la figure 13, une étape d'usinage visant à rectifier ou calibrer les bords longitudinaux 58.1, 58.2 du panneau intercalaire 54 et le bord arrière extérieur 42.1 de la lèvre 42, comme illustré sur la partie (B) de la figure 13.

## Revendications

1. Entrée d'air d'une nacelle d'aéronef comportant :
- une lèvre (42) présentant des faces externe et interne (F42, F42') ainsi qu'un bord d'attaque (44.1) configuré pour scinder un flux d'air (46) en des flux d'air intérieur et extérieur (46.1, 46.2), le flux d'air intérieur (46.1) pénétrant dans l'entrée d'air (40), le flux d'air extérieur (46.2) étant laminaire sur une longueur (L) donnée,
- un panneau extérieur (48) présentant une face externe (F48) contre laquelle s'écoule le flux d'air extérieur (46.2) en fonctionnement, une face interne (F48') opposée à la face externe (F48) ainsi qu'un bord avant (48A) orienté vers la lèvre (42),
- un cadre avant (42), en forme d'anneau, qui présente des bords extérieur et intérieur (52.1, 52.2);
tel que l'entrée d'air (40) comprend un panneau intercalaire (54), intercalé entre la lèvre (42) et le panneau extérieur (48), présentant une face externe (F54) contre laquelle s'écoule le flux d'air extérieur (46.2) en fonctionnement, une face interne (F54') opposée à la face externe (F54), un premier bord (54.1) relié à la lèvre (42) par au moins une première liaison (56.1) ainsi qu'un deuxième bord (54.2) relié au panneau extérieur (48) par au moins une deuxième liaison (56.2) et tel que la première liaison (56.1) reliant le premier bord (54.1) du panneau intercalaire (54) et la lèvre (42) comprend au moins un premier cordon de soudure bout à bout (60) présentant une face externe (F60) dans le prolongement des faces externes (F42, F54) de la lèvre (42) et du panneau intercalaire (54), l'entrée d'air (40) comprenant une troisième liaison (68) reliant le bord extérieur (52.1) du cadre avant (52) et au moins une paroi choisie parmi la lèvre (42), le panneau extérieur (48) et le panneau intercalaire (54), la troisième liaison (68) comprenant au moins une extension interne (70) solidaire du panneau intercalaire (54), orientée vers le cadre avant (52) et reliée à ce dernier, l'extension interne (70) et le panneau intercalaire (54) formant une unique et même pièce.

2. Entrée d'air selon la revendication précédente, **caractérisée en ce que** le panneau extérieur (48) présente un soyage (62) à proximité de son bord avant (48A) ainsi qu'une portion chevauchante (48P) située entre le soyage (62) et le bord avant (48A), positionnée contre la face interne (F54') du panneau intercalaire (54), et **en ce que** la deuxième liaison (56.2) comprend des éléments de liaison (62.1) reliant le panneau intercalaire (54) et le panneau extérieur (48) au niveau de sa portion chevauchante (48P).

3. Entrée d'air selon la revendication précédente, **caractérisée en ce que** la deuxième liaison (56.2) reliant le deuxième bord (54.2) du panneau intercalaire (54) et le panneau extérieur (48) est séparée du bord d'attaque (44.1) d'une distance supérieure ou égale à la longueur (L) donnée du flux d'air extérieur (46.2) laminaire.

4. Aéronef comportant au moins une entrée d'air selon l'une des revendications précédentes.

5. Procédé d'assemblage d'une entrée d'air selon l'une des revendications 1 à 3, tel que le procédé d'assemblage comprend une étape d'assemblage de la lèvre (42) ou d'une partie de la lèvre (78.1, 78.2) et du panneau intercalaire (54) ou d'une partie du panneau intercalaire (80.1, 80.2) par soudage grâce à au moins un premier cordon de soudure bout à bout (60), une étape d'assemblage des panneaux extérieur et intercalaire (48, 54) ainsi qu'une étape d'assemblage du cadre avant (52).

6. Procédé d'assemblage selon la revendication précédente, **caractérisé en ce que** le premier cordon de soudure bout à bout (60) est obtenu par un procédé de soudage par friction malaxage.

7. Procédé d'assemblage selon l'une des revendications 5 ou 6, **caractérisé en ce que** le procédé d'assemblage comprend une étape de calibrage du premier cordon de soudure bout à bout (60) afin que sa face externe (F60) affleure les faces externes (F42, F54) de la lèvre (42) et du panneau intercalaire (54).

8. Procédé d'assemblage selon l'une des revendications 5 à 7, **caractérisé en ce que** le procédé d'assemblage comprend une étape de fabrication de première et deuxième demi-lèvres (78.1, 78.2) sensiblement symétriques par rapport à un plan longitudinal de symétrie et de premier et deuxième demi-éléments de jonction (78.1, 78.2) sensiblement symétriques par rapport au plan longitudinal de symétrie, ainsi qu'une étape de fixation du premier demi-élément de jonction (78.1) sur la face interne de la première demi-lèvre (76.1) afin d'obtenir une première moitié de lèvre (80.1) et du deuxième demi-élément de jonction (78.2) sur la face interne de la demi-lèvre (76.2) afin d'obtenir une deuxième moitié de lèvre (80.2).

9. Procédé d'assemblage selon la revendication précédente, **caractérisée en ce que** le procédé d'assemblage comprend une étape d'assemblage des première et deuxième moitiés de lèvre (80.1, 80.2) en les reliant par des premier et deuxième cordons de soudure bout à bout longitudinaux (82.1, 82.2) de manière à obtenir une lèvre (42).

10. Procédé d'assemblage selon l'une des revendications 5 à 9, **caractérisé en ce que** la lèvre (42) est continue sur toute la circonférence de l'entrée d'air (40), **en ce que** le panneau intercalaire (54) comprend une ouverture (50) délimitée par des bords longitudinaux (58.1, 58.2) du panneau intercalaire (54) et par une partie d'un bord arrière extérieur (42.1) de la lèvre (42) et **en ce que** le procédé d'assemblage comprend, après l'étape d'assemblage de la lèvre (42) et du panneau intercalaire (54), une étape d'usinage visant à rectifier ou calibrer les bords longitudinaux (58.1, 58.2) du panneau intercalaire (54) et le bord arrière extérieur (42.1) de la lèvre (42).

## Patentansprüche

1. Lufteinlass einer Flugzeuggondel, umfassend:
- eine Lippe (42), die Außen- und Innenseiten (F42, F42') sowie eine Anströmkante (44.1), die dazu ausgebildet ist, einen Luftstrom (46) in einen Innen- und einen Außenluftstrom (46.1, 46.2) aufzuteilen, aufweist, wobei der Innenluftstrom (46.1) in den Lufteinlass (40) eindringt, wobei der Außenluftstrom (46.2) über eine gegebene Länge (L) laminar ist,
- ein Außenpaneel (48), das eine Außenseite (F48), gegen die im Betrieb der Außenluftstrom (46.2) strömt, eine Innenseite (F48'), die zu der Außenseite (F48) entgegengesetzt ist, sowie eine Vorderkante (48A), die zu der Lippe (42) hin gerichtet ist, aufweist,
- einen ringförmigen vorderen Rahmen (42), der Außen-und Innenkanten (52.1, 52.2) aufweist;
derart, dass der Lufteinlass (40) ein Zwischenpaneel (54) umfasst, das zwischen der Lippe (42) und dem Außenpaneel (48) angeordnet ist und eine Außenseite (F54), gegen die im Betrieb der Außenluftstrom (46.2) strömt, eine Innenseite (F54'), die zu der Außenseite (F54) entgegengesetzt ist, eine erste Kante (54.1), die mit der Lippe (42) durch mindestens eine erste Verbindung (56.1) verbunden ist, sowie eine zweite Kante (54.2), die mit dem Außenpaneel (48) durch mindestens eine zweite Verbindung (56.2) verbunden ist, aufweist, und derart, dass die erste Verbindung (56.1), die die erste Kante (54.1) des Zwischenpaneels (54) und die Lippe (42) verbindet, mindestens eine erste Stumpfschweißnaht (60) umfasst, die eine Außenseite (F60) in der Verlängerung der Außenseiten (F42, F54) der Lippe (42) und des Zwischenpaneels (54) aufweist, wobei der Lufteinlass (40) eine dritte Verbindung (68) umfasst, die die Außenkante (52.1) des vorderen Rahmens (52) und mindestens eine Wand, die aus der Lippe (42), dem Außenpaneel (48) und dem Zwischenpaneel (54) ausgewählt ist, verbindet, wobei die dritte Verbindung (68) mindestens einen inneren Fortsatz (70) umfasst, der mit dem Zwischenpaneel (54) einstückig ist, zu dem vorderen Rahmen (52) hin gerichtet ist und mit Letzterem verbunden ist, wobei der innere Fortsatz (70) und das Zwischenpaneel (54) ein und dasselbe Teil bilden.

2. Lufteinlass nach dem vorhergehenden Anspruch, **dadurch gekennzeichnet, dass** das Außenpaneel (48) eine Kröpfung (62) in der Nähe seiner Vorderkante (48A) sowie einen zwischen der Kröpfung (62) und der Vorderkante (48A) gelegenen überlappenden Abschnitt (48P), der an der Innenseite (F54') des Zwischenpaneels (54) positioniert ist, aufweist, und dass die zweite Verbindung (56.2) Verbindungselemente (62.1) umfasst, die das Zwischenpaneel (54) und das Außenpaneel (48) an seinem überlappenden Abschnitt (48P) verbinden.

3. Lufteinlass nach dem vorhergehenden Anspruch, **dadurch gekennzeichnet, dass** die zweite Verbindung (56.2), die die zweite Kante (54.2) des Zwischenpaneels (54) und das Außenpaneel (48) verbindet, von der Anströmkante (44.1) um einen Abstand getrennt ist, der größer oder gleich der gegebenen Länge (L) des laminaren Außenluftstroms (46.2) ist.

4. Flugzeug, das mindestens einen Lufteinlass nach einem der vorhergehenden Ansprüche umfasst.

5. Verfahren zum Fügen eines Lufteinlasses nach einem der Ansprüche 1 bis 3, derart, dass das Verfahren zum Fügen einen Schritt des Fügens der Lippe (42) oder eines Teils der Lippe (78.1, 78.2) und des Zwischenpaneels (54) oder eines Teils des Zwischenpaneels (80.1, 80.2) durch Schweißen mittels mindestens einer ersten Stumpfschweißnaht (60), einen Schritt des Fügens der Außen- und Zwischenpaneele (48, 54) sowie einen Schritt des Fügens des vorderen Rahmens (52) umfasst.

6. Verfahren zum Fügen nach dem vorhergehenden Anspruch, **dadurch gekennzeichnet, dass** die erste Stumpfschweißnaht (60) durch ein Reibrührschweißverfahren erhalten wird.

7. Verfahren zum Fügen nach einem der Ansprüche 5 oder 6, **dadurch gekennzeichnet, dass** das Verfahren zum Fügen einen Schritt des Kalibrierens der ersten Stumpfschweißnaht (60) umfasst, damit ihre Außenseite (F60) bündig mit den Außenseiten (F42, F54) der Lippe (42) und des Zwischenpaneels (54) ist.

8. Verfahren zum Fügen nach einem der Ansprüche 5 bis 7, **dadurch gekennzeichnet, dass** das Verfahren zum Fügen einen Schritt des Herstellens von ersten und zweiten Halblippen (78.1, 78.2), die im Wesentlichen symmetrisch zu einer Längssymmetrieebene sind, und von ersten und zweiten Halbverbindungselementen (78.1, 78.2), die im Wesentlichen symmetrisch zu der Längssymmetrieebene sind, sowie einen Schritt des Fixierens des ersten Halbverbindungselements (78.1) an der Innenseite der ersten Halblippe (76.1), um eine erste Lippenhälfte (80.1) zu erhalten, und des zweiten Halbverbindungselements (78.2) an der Innenseite der Halblippe (76.2), um eine zweite Lippenhälfte zu erhalten (80.2), umfasst.

9. Verfahren zum Fügen nach dem vorhergehenden Anspruch, **dadurch gekennzeichnet, dass** das Verfahren zum Fügen einen Schritt des Fügens der ersten und zweiten Lippenhälften (80.1, 80.2) umfasst, bei dem sie durch erste und zweite Längsstumpfschweißnähte (82.1, 82.2) verbunden werden, so dass eine Lippe (42) erhalten wird.

10. Verfahren zum Fügen nach einem der Ansprüche 5 bis 9, **dadurch gekennzeichnet, dass** die Lippe (42) über den gesamten Umfang des Lufteinlasses (40) durchgehend ist, dass das Zwischenpaneel (54) eine Öffnung (50) umfasst, die durch Längskanten (58.1, 58.2) des Zwischenpaneels (54) und durch einen Teil einer äußeren Hinterkante (42.1) der Lippe (42) begrenzt wird, und dass das Verfahren zum Fügen nach dem Schritt des Fügens der Lippe (42) und des Zwischenpaneels (54) einen Schritt des Bearbeitens umfasst, der dazu dient, die Längskanten (58.1, 58.2) des Zwischenpaneels (54) und die äußere Hinterkante (42.1) der Lippe (42) zu schleifen oder zu kalibrieren.

## Claims

1. Air inlet of an aircraft nacelle, having:
- a lip (42) having external and internal faces (F42, F42') and a leading edge (44.1) configured to split an air flow (46) into interior and exterior air flows (46.1, 46.2), the interior air flow (46.1) entering the air inlet (40), the exterior air flow (46.2) being laminar over a given length (L),
- an exterior panel (48) having an external face (F48) against which the exterior air flow (46.2) flows in operation, an internal face (F48') opposite the external face (F48) and a front edge (48A) oriented towards the lip (42),
- a front frame (42), in the form of a ring, which has exterior and interior edges (52.1, 52.2);
such that the air inlet (40) comprises an interposed panel (54), interposed between the lip (42) and the exterior panel (48), having an external face (F54) against which the exterior air flow (46.2) flows in operation, an internal face (F54') opposite the external face (F54), a first edge (54.1) connected to the lip (42) by at least one first connection (56.1) and a second edge (54.2) connected to the exterior panel (48) by at least one second connection (56.2) and such that the first connection (56.1) connecting the first edge (54.1) of the interposed panel (54) and the lip (42) comprises at least one first butt weld bead (60) having an external face (F60) in the continuation of the external faces (F42, F54) of the lip (42) and of the interposed panel (54), the air inlet (40) comprising a third connection (68) connecting the exterior edge (52.1) of the front frame (52) and at least one wall selected from among the lip (42), the exterior panel (48) and the interposed panel (54), the third connection (68) comprising at least one internal extension (70) as one with the interposed panel (54), oriented towards the front frame (52) and connected to the latter, the internal extension (70) and the interposed panel (54) forming just a single piece.

2. Air inlet according to the preceding claim, **characterized in that** the exterior panel (48) has a swage (62) near its front edge (48A) and an overlapping portion (48P) situated between the swage (62) and the front edge (48A), positioned against the internal face (F54') of the interposed panel (54), and **in that** the second connection (56.2) comprises connection elements (62.1) connecting the interposed panel (54) and the exterior panel (48) at the overlapping portion (48P) thereof.

3. Air inlet according to the preceding claim, **characterized in that** the second connection (56.2) connecting the second edge (54.2) of the interposed panel (54) and the exterior panel (48) is separated from the leading edge (44.1) by a distance greater than or equal to the given length (L) of the exterior laminar air flow (46.2) .

4. Aircraft having at least one air inlet according to one of the preceding claims.

5. Method for assembling an air inlet according to one of Claims 1 to 3, such that the assembly method comprises a step of assembling the lip (42) or a part of the lip (78.1, 78.2) and the interposed panel (54) or a part of the interposed panel (80.1, 80.2) by welding by virtue of at least one first butt weld bead (60), a step of assembling the exterior and interposed panels (48, 54) and a step of assembling the front frame (52).

6. Assembly method according to the preceding claim, **characterized in that** the first butt weld bead (60) is obtained via a friction stir welding process.

7. Assembly method according to either of Claims 5 and 6, **characterized in that** the assembly method comprises a step of calibrating the first butt weld bead (60) so that its external face (F60) lies flush with the external faces (F42, F54) of the lip (42) and of the interposed panel (54).

8. Assembly method according to one of Claims 5 to 7, **characterized in that** the assembly method comprises a step of manufacturing first and second half-lips (78.1, 78.2) that are substantially symmetrical with respect to a longitudinal plane of symmetry, and first and second half-joining elements (78.1, 78.2) that are substantially symmetrical with respect to the longitudinal plane of symmetry, and a step of fastening the first half-joining element (78.1) to the internal face of the first half-lip (76.1) in order to obtain a first lip half (80.1) and the second half-joining element (78.2) to the internal face of the half-lip (76.2) in order to obtain a second lip half (80.2).

9. Assembly method according to the preceding claim, **characterized in that** the assembly method comprises a step of assembling the first and second lip halves (80.1, 80.2) by connecting them via first and second longitudinal butt weld beads (82.1, 82.2) so as to obtain a lip (42).

10. Assembly method according to one of Claims 5 to 9, **characterized in that** the lip (42) is continuous over the entire circumference of the air inlet (40), **in that** the interposed panel (54) comprises an opening (50) delimited by longitudinal edges (58.1, 58.2) of the interposed panel (54) and by a part of an exterior rear edge (42.1) of the lip (42) and **in that** the assembly method comprises, after the step of assembling the lip (42) and the interposed panel (54), a step of machining aimed at rectifying or calibrating the longitudinal edges (58.1, 58.2) of the interposed panel (54) and the exterior rear edge (42.1) of the lip (42).
